# FASCICULE DE BREVET EUROPEEN

(11) **EP 3 758 871 B1**
(45) Date de publication et mention de la délivrance du brevet: **05.04.2023**
(21) Numéro de dépôt: 19711990.2
(22) Date de dépôt: 25.02.2019
(51) Int. Cl.: B22F 10/28, B33Y 30/00, B29C 64/321, B22F 12/52, B22F 12/57, B29C 64/205, B29C 64/255, B22F 3/105, B22F 12/37, B33Y 10/00, B33Y 40/00, B22F 12/90, B29C 64/153

(54) **MACHINE DE FABRICATION ADDITIVE COMPRENANT UN DISPOSITIF DE DISTRIBUTION DE POUDRE PAR VIBRATIONS SUR UNE SURFACE MOBILE**
MASCHINE ZUR GENERATIVEN FERTIGUNG MIT EINER VORRICHTUNG ZUM VERTEILEN VON PULVER AUF EINER MOBILEN OBERFLÄCHE MITTELS VIBRATION
ADDITIVE MANUFACTURING MACHINE COMPRISING A DEVICE FOR THE DISTRIBUTION OF POWDER ONTO A MOBILE SURFACE USING VIBRATION

(30) Priorité: 01.03.2018 FR 1851809
(43) Date de publication de la demande: 06.01.2021
(73) Titulaire: AddUp, 63118 Cébazat (FR)
(72) Inventeur: CARLAVAN, Cédric, 63118 Cebazat (FR); WALRAND, Gilles, 63118 Cebazat (FR)
(74) Mandataire: Barascou, Frédéric
(86) Numéro de dépôt international: PCT/FR2019/050427
(87) Numéro de publication internationale: WO 2019/166727

(56) Documents cités:
- WO-A1-2017/108868
- US-A- 3 091 368
- Dietmar Schulze ET AL: "Sections 12.2 to 12.3.2.5", Powders and Bulk Solids: Behavior, Characterization, Storage and Flow, 1 décembre 2007 (2007-12-01), pages 347-363, XP055516931, ISBN: 978-3-540-73767-4 Extrait de l'Internet: URL:https://www.springer.com/gp/book/97835 40737674 [extrait le 2018-10-18]
- DUNST P ET AL: "Analysis of pipe vibration in an ultrasonic powder transportation system", SENSORS AND ACTUATORS A: PHYSICAL, ELSEVIER BV, NL, vol. 263, 29 juin 2017 (2017-06-29), pages 733-736, XP085181863, ISSN: 0924-4247, DOI: 10.1016/J.SNA.2017.05.050

## Description

L'invention se situe dans le domaine de la fabrication additive à base de poudre par fusion des grains de cette poudre à l'aide d'une ou plusieurs sources d'énergie ou de chaleur comme un faisceau laser et/ou un faisceau d'électrons et/ou des diodes.

Plus précisément, l'invention se situe dans le domaine de la fabrication additive par dépôt de lit de poudre et elle vise à alimenter en poudre le dispositif permettant la mise en couche de la poudre de fabrication additive à l'intérieur d'une machine de fabrication additive par dépôt de lit de poudre.

Plus précisément encore, l'invention vise à alimenter une surface mobile de réception de poudre avec un débit de poudre stable et maîtrisé.

La demande WO2017108868 décrit une machine de fabrication additive par dépôt de lit de poudre comprenant une enceinte de fabrication à l'intérieur de laquelle se situe un plan de travail et au moins une zone de travail où des couches de poudre sont étalées et consolidées de manière sélective successivement les unes après les autres.

En vue de réaliser les différentes couches de poudre utiles à la fabrication, la machine décrite dans la demande WO2017108868 comprend un dispositif d'étalement de poudre, tel un rouleau ou une raclette, apte à être déplacé au-dessus de la zone de travail et un dispositif de dépôt de poudre sur le plan de travail comprenant un tiroir de réception de poudre et un injecteur de poudre. Le tiroir est mobile en translation par rapport au plan de travail entre une position rétractée dans laquelle le tiroir s'étend en dehors de la trajectoire du dispositif d'étalement de poudre et une position déployée dans laquelle le tiroir s'étend au moins en partie dans la trajectoire du dispositif d'étalement de poudre. L'injecteur est disposé au-dessus du tiroir de réception de poudre, de manière à distribuer de la poudre sur le tiroir de réception lorsque ce tiroir se déplace entre sa position rétractée et sa position déployée.

Cette demande WO2017108868 prévoit aussi que l'injecteur est raccordé à un réservoir de poudre, par exemple via un raccord de type flexible, et qu'une trémie de dosage peut être interposée entre le réservoir et l'injecteur.

Toutefois, cette demande WO2017108868 ne précise ni un agencement précis de la trémie de dosage, ni un agencement précis des moyens permettant de distribuer la poudre sur le tiroir mobile.

Or, avec une surface de réception de poudre mobile telle que prévue dans la demande WO2017108868, il est nécessaire de délivrer un débit de poudre maîtrisé à la sortie de l'injecteur et stable pendant le mouvement du tiroir.

En effet, la qualité du cordon de poudre déposé sur le tiroir est directement liée à la qualité des pièces fabriquées.

Si le débit de poudre faiblit pendant le mouvement du tiroir, certaines couches de poudre étalées sur la zone de travail auront des épaisseurs insuffisantes par endroits, ce qui conduira à la fabrication de pièces avec des défauts ou non-conformes.

D'autre part, si le débit de poudre est trop important pendant tout ou partie du mouvement du tiroir, une certaine quantité de poudre sera inutilement déposée en excès et viendra augmenter la quantité déjà importante de poudre qui n'est pas consolidée et qui, dans certaines applications comme la fabrication de prothèses, ne peut être réutilisée sans être fondue et reconditionnée en poudre à nouveau.

La présente invention a pour objectif de fournir un dispositif de distribution de poudre capable de délivrer un débit de poudre stable et maîtrisé en au moins un point situé à l'intérieur de l'enceinte d'une machine de fabrication additive, et notamment sur une surface mobile de réception de poudre située à proximité d'une zone de travail.

A cet effet, l'invention a pour objet une machine de fabrication additive par dépôt de lit de poudre, cette machine de fabrication additive comprenant une enceinte de fabrication et au moins une source de chaleur ou d'énergie utilisée pour fusionner de manière sélective une couche de poudre de fabrication additive déposée à l'intérieur de l'enceinte de fabrication. De plus, la machine de fabrication additive comprend au moins une surface de réception de poudre mobile et apte à se déplacer à proximité d'une zone de fabrication située à l'intérieur de l'enceinte de fabrication, un dispositif d'étalement de poudre permettant d'étaler la poudre de la surface de réception mobile vers la zone de fabrication, et un dispositif de distribution de poudre sur la surface de réception mobile.

Selon l'invention, le dispositif de distribution de poudre comprend un réservoir tampon relié à une alimentation en poudre et un conduit de distribution reliant le réservoir tampon à un point de distribution de poudre situé au-dessus de la surface de réception mobile.

Toujours selon l'invention, le conduit de distribution est monté sur un dispositif vibrant permettant de faire vibrer le conduit de distribution de façon à générer un flux continu de poudre dans le conduit de distribution et du réservoir tampon vers le point de distribution.

L'utilisation de vibrations pour distribuer une poudre de fabrication additive est avantageuse car elle permet d'éviter l'utilisation de pièces mobiles, comme par exemple un rouleau à rainure rotatif ou un plateau mobile en translation, qui sont susceptibles d'être bloquées ou endommagées par des grains ou des amas de poudre.

En modulant l'amplitude et la fréquence des vibrations, le dispositif vibrant permet de modifier facilement et rapidement le débit du flux continu de poudre entre le réservoir tampon et le point de distribution, et donc la quantité de poudre déposée sur la surface de réception mobile, sans devoir changer de pièce dans le dispositif de distribution comme cela serait le cas avec un rouleau à rainure par exemple.

Toujours en modulant l'amplitude et la fréquence des vibrations, le dispositif de distribution est facilement et rapidement adaptable à des poudres de différentes granulométries.

Enfin, comme le dispositif de distribution ne comprend pas de pièces mobiles en rotation ou en translation, le nettoyage du dispositif de distribution est facilité, par exemple lorsque l'on souhaite utiliser la machine de fabrication additive avec un autre lot de poudre de composition différente et/ou de différente granulométrie par exemple.

D'autres caractéristiques et avantages de l'invention apparaîtront dans la description qui va suivre. Cette description, donnée à titre d'exemple et non limitative, se réfère aux dessins joints en annexe sur lesquels :
- la figure 1 est une vue de face schématique d'une machine de fabrication additive,
- la figure 2 est une vue de dessus schématique d'une machine de fabrication additive selon l'invention,
- la figure 3 est une vue de côté d'une première variante d'un dispositif de distribution de poudre d'une machine de fabrication additive selon l'invention, et
- la figure 4 est une vue de côté d'une seconde variante d'un dispositif de distribution de poudre d'une machine de fabrication additive selon l'invention.

L'invention est relative à une machine de fabrication additive par dépôt de lit de poudre. La fabrication additive par dépôt de lit de poudre est un procédé de fabrication additif dans lequel une ou plusieurs pièces sont fabriquées par la fusion sélective de différentes couches de poudre de fabrication additive superposées les unes sur les autres. La première couche de poudre est déposée sur un support tel un plateau, puis frittée ou fusionnée sélectivement à l'aide d'une ou plusieurs sources d'énergie ou de chaleur selon une première section horizontale de la ou des pièces à fabriquer. Puis, une deuxième couche de poudre est déposée sur la première couche de poudre qui vient d'être fusionnée ou frittée, et cette deuxième couche de poudre est frittée ou fusionnée sélectivement à son tour, et ainsi de suite jusqu'à la dernière couche de poudre utile à la fabrication de la dernière section horizontale de la ou des pièces à fabriquer.

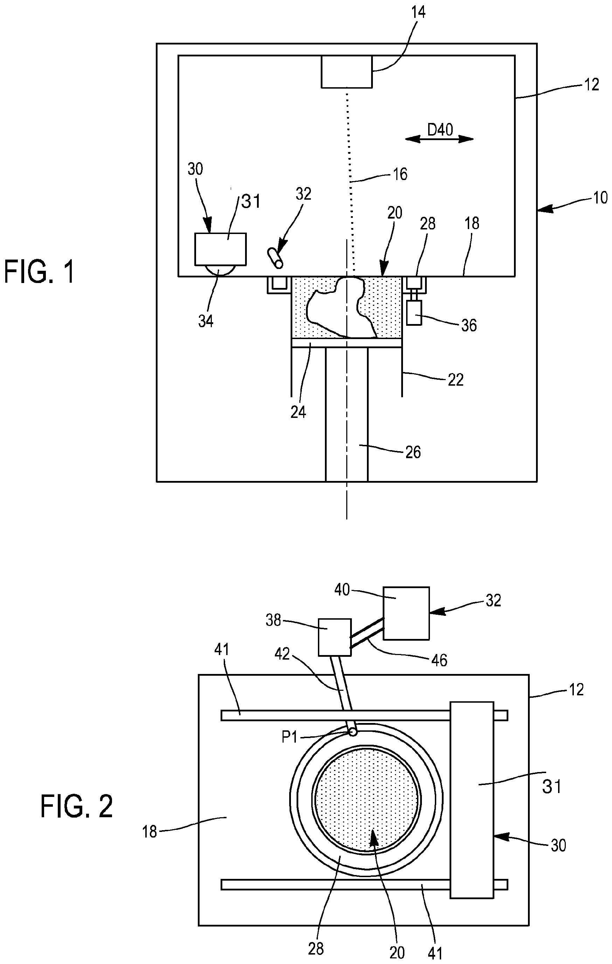

Comme l'illustre la figure 1 et afin de permettre une fabrication additive de pièces par dépôt de lit de poudre, la machine 10 de fabrication additive selon l'invention comprend une enceinte de fabrication 12 et au moins une source 14 de chaleur ou d'énergie utilisée pour fusionner de manière sélective, via un ou plusieurs faisceaux 16, une couche de poudre de fabrication additive déposée à l'intérieur de l'enceinte de fabrication 12.

La ou les sources de chaleur ou d'énergie 14 peuvent prendre la forme de sources capables de produire un ou plusieurs faisceaux d'électrons et/ou un ou plusieurs faisceaux laser. Ces sources sont par exemple un ou plusieurs canons d'électrons et/ou une ou plusieurs diodes électroluminescentes. Afin de permettre une fusion sélective et donc un déplacement du ou des faisceaux d'énergie ou de chaleur 16, chaque source 14 comprend des moyens de déplacement et de contrôle du ou des faisceaux 16.

L'enceinte de fabrication 12 est une enceinte fermée. Une paroi de cette enceinte de fabrication 12 peut comprendre une vitre permettant d'observer la fabrication en cours à l'intérieur de l'enceinte. Au moins une paroi de cette enceinte de fabrication 12 comprend une ouverture donnant accès à l'intérieur de l'enceinte pour des opérations de maintenance ou de nettoyage, cette ouverture pouvant être refermée de manière étanche à l'aide d'une porte pendant un cycle de fabrication. Pendant un cycle de fabrication, l'enceinte de fabrication 12 peut être remplie avec un gaz inerte tel l'azote pour éviter d'oxyder la poudre de fabrication additive et/ou pour éviter les risques d'explosion. L'enceinte de fabrication 12 peut être maintenue en légère surpression pour éviter les entrées d'oxygène, ou maintenue sous vide lorsqu'un faisceau d'électrons est utilisé à l'intérieur de l'enceinte pour fritter ou fusionner la poudre.

A l'intérieur de l'enceinte de fabrication 12, la machine 10 de fabrication additive selon l'invention comprend : un plan de travail horizontal 18 et au moins une zone de fabrication 20 définie par une chemise de fabrication 22 et un plateau de fabrication 24. La chemise 22 s'étend verticalement sous le plan de travail 18 et elle débouche dans le plan de travail 18. Le plateau de fabrication 24 coulisse verticalement à l'intérieur de la chemise de fabrication 22 sous l'effet d'un actionneur 26 tel un vérin.

Afin de réaliser les différentes couches de poudre utiles à la fabrication additive de la ou des pièces à fabriquer, la machine de fabrication additive selon l'invention comprend au moins une surface de réception de poudre mobile 28 et apte à se déplacer à proximité d'une zone de fabrication 20 située à l'intérieur de l'enceinte de fabrication, un dispositif d'étalement de poudre 30 permettant d'étaler la poudre de la surface de réception mobile 28 vers la zone de fabrication 20, et un dispositif de distribution de poudre 32 sur la surface de réception mobile 28.

Le dispositif d'étalement 30 prend la forme d'une raclette ou d'un rouleau 34 monté sur un chariot 31. Ce chariot 31 est monté mobile en translation dans une direction horizontale D40 au-dessus de la zone de fabrication 20. A cet effet, le chariot 31 est par exemple monté sur des rails 41. Afin d'être entraîné en translation horizontale, le chariot 31 peut être motorisé, ou mis en mouvement par un moteur se situant à l'intérieur ou de préférence à l'extérieur de l'enceinte de fabrication 12 et via un système de transmission de mouvement tels des poulies et une courroie.

De préférence, dans la machine de fabrication additive selon l'invention, la surface de réception de poudre 28 est montée mobile autour de la zone de fabrication 20 et mise en mouvement autour de la zone de fabrication 20 par un actionneur 36 tel un moteur.

En étant montée mobile autour de la zone de fabrication, la surface de réception 28 offre un encombrement réduit autour de la zone de fabrication 20. De plus, la mobilité de la surface de réception autour de la zone de fabrication permet d'emmener de la poudre n'importe où devant la zone de fabrication 20, ce qui permet au dispositif d'étalement 30 de travailler dans les deux sens opposés de la direction horizontale D40 de translation du chariot 31.

De préférence, la surface de réception 28 est montée mobile en rotation autour de la zone de fabrication 20 et entraînée en rotation autour de la zone de fabrication 20 par l'actionneur 36.

Plus en détail, la surface de réception 28 est montée mobile en rotation autour d'un axe vertical D32 et entraînée en rotation autour de cet axe vertical par l'actionneur 36.

Pour fabriquer des pièces de révolution ou améliorer la résistance mécanique de la chemise de fabrication 22 au vide en vue d'une fabrication additive par faisceau d'électrons, la chemise de fabrication 22 est de préférence cylindrique et la zone de fabrication 20 est de préférence circulaire, comme l'illustre la figure 2.

La chemise de fabrication 22 étant de préférence cylindrique autour d'un axe central vertical D22, l'axe vertical D32 de rotation de la surface de réception 28 est confondu avec l'axe central vertical D22 de la chemise de fabrication 22 cylindrique et de la zone de fabrication 20.

Aussi, la surface de réception mobile 28 est de préférence annulaire et elle entoure extérieurement la zone de fabrication 20 sur toute sa circonférence. Toujours de préférence, la surface de réception mobile 28 est annulaire autour de son axe vertical D32 de mise en rotation.

Cette configuration annulaire de la surface de réception mobile 28 permet de réduire au maximum l'encombrement de cette surface autour de la zone de fabrication 20.

Pour déposer de la poudre sur la surface de réception mobile 28, la machine de fabrication additive selon l'invention comprend un dispositif de distribution de poudre 32 sur la surface de réception mobile 28.

Selon l'invention, et comme l'illustre schématiquement la figure 2, le dispositif de distribution de poudre 32 comprend un réservoir tampon 38 relié à une alimentation en poudre 40 et un conduit de distribution 42 reliant le réservoir tampon 38 à un point de distribution de poudre P1 situé au-dessus de la surface de réception mobile 28.

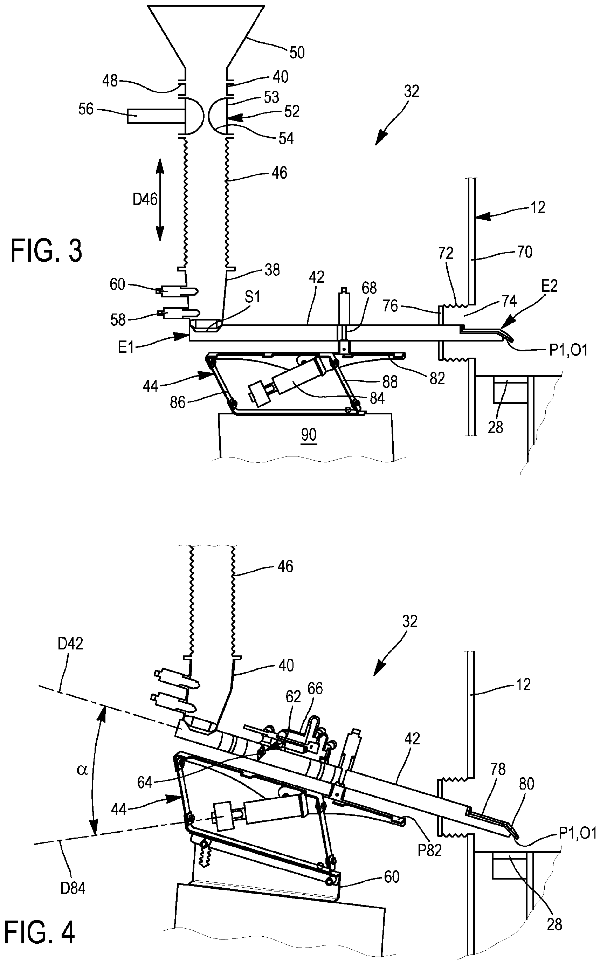

Toujours selon l'invention, et comme l'illustrent les figures 3 et 4, le conduit de distribution 42 est monté sur un dispositif vibrant 44 permettant de faire vibrer le conduit de distribution de façon à générer un flux continu de poudre dans le conduit de distribution et du réservoir tampon 38 vers le point de distribution de poudre P1.

De préférence, le réservoir tampon 38 est fixé de manière rigide au conduit de distribution 42. Ainsi, le dispositif vibrant 44 permet aussi de faire vibrer le réservoir tampon 38 pour favoriser l'écoulement de la poudre et éviter la constitution de voûtes de poudre à l'intérieur du réservoir tampon 38.

Plus en détail, le réservoir tampon 38 est fixé à une extrémité amont E1 du conduit de distribution, et le point de distribution de poudre se situe à l'autre extrémité aval E2 du conduit de distribution.

Afin d'isoler l'alimentation en poudre 40 des vibrations du conduit de distribution 42 et du réservoir tampon, le réservoir tampon 38 est relié à l'alimentation en poudre par un conduit flexible 46, par exemple de type soufflet. Ce conduit flexible est de préférence réalisé dans une composition caoutchouteuse à base de chloroprène, offrant une bonne étanchéité au vide.

Afin de favoriser l'écoulement de la poudre par gravité dans le conduit flexible 46, l'alimentation en poudre 40 est disposée au-dessus du réservoir tampon 38. Dans le même objectif, le conduit flexible est de préférence disposé selon une direction verticale D46.

L'alimentation en poudre 40 peut être reliée à un circuit d'alimentation en poudre automatisé, mais de préférence, l'alimentation en poudre comprend des moyens de réception 48 d'un réservoir principal 50. Ces moyens de réception 48 prennent par exemple la forme d'une bride.

Le réservoir principal 50 a une contenance importante, de plusieurs dizaines de litres par exemple, afin de contenir une quantité de poudre suffisante pour un cycle entier de fabrication additive. En comparaison du réservoir principal 50, le réservoir tampon 38 offre une contenance moins importante, de quelques litres seulement. Cela permet d'éviter de mettre une grande quantité de poudre en vibrations et donc, d'éviter un surdimensionnement du dispositif vibrant 44.

En raison de sa faible contenance, le réservoir tampon 38 doit être régulièrement réalimenté en poudre. A cet effet, une vanne à membrane 52 est intercalée entre l'alimentation en poudre 40 et le conduit flexible 46. Plus en détail, la vanne à membrane 52 comprend un corps creux 53 et une membrane intérieure 54 qui s'étend ou se rétracte de manière à bloquer ou à libérer le passage de la poudre entre l'alimentation en poudre 40 et le conduit flexible 46. La membrane intérieure 54 s'étend ou se rétracte par exemple en faisant varier la pression du ou des gaz contenu dans le volume fermé se situant entre le corps creux 53 et cette membrane intérieure.

L'utilisation d'une vanne à membrane 52 est particulièrement adaptée à la régulation d'un écoulement de poudre car elle ne comprend pas de pièces d'obturation de type papillon susceptibles d'être bloquées lors de leur mise en mouvement par des grains de poudre.

Pour gérer au mieux les réalimentations en poudre du réservoir tampon 38, le réservoir tampon 38 est équipé d'au moins un détecteur de niveau bas de poudre 58. De préférence, le réservoir tampon 38 est équipé d'un détecteur de niveau haut de poudre 60 et d'un capteur de niveau bas de poudre 58. Le fonctionnement, et plus particulièrement l'ouverture, de la vanne à membrane 52 est asservie aux informations transmises par le ou les détecteurs de niveau de poudre équipant le réservoir tampon 38.

Les vibrations générées par le dispositif vibrant 44 permettent de générer un flux continu de poudre dans le conduit de distribution 42 et du réservoir tampon 38 vers le point de distribution P1 même si ce conduit de distribution 42 est disposé horizontalement. Toutefois, comme l'illustre la figure 4, le dispositif vibrant 44 et le conduit de distribution 42 peuvent aussi être montés sur un support à inclinaison réglable 60. Ce support à inclinaison réglable 60 permet d'incliner le conduit de distribution 42 de manière à placer le réservoir tampon 38 au-dessus du point de distribution P1, par exemple pour favoriser l'écoulement de poudres de fabrication additive moins fluides que d'autres.

Suite à différents essais, il est apparu qu'une inclinaison du conduit de distribution 42 de 10° par rapport à l'horizontale offrait un bon compromis vis-à-vis du débit du flux de poudre et de sa stabilité lors de la distribution.

Couplée à l'utilisation de vibrations, une inclinaison du conduit de distribution 42 peut conduire à une maîtrise optimale du débit et de la stabilité du flux de poudre entre le réservoir tampon 38 et le point de distribution P1, et donc à une qualité optimale du cordon de poudre déposé sur la surface de réception mobile 28.

Le dispositif vibrant 44 prend par exemple la forme d'une plateforme 82 sur laquelle est fixé le conduit de distribution 42, et donc le réservoir tampon 38, ainsi qu'un vibrateur 84. Le vibrateur 84 prend par exemple la forme d'un vérin double-effet avec des masses montées sur sa tige. La plateforme 82 est montée sur deux lames flexibles 86,88 fixées sur un bâti 90, ce bâti 90 étant désolidarisé en vibrations de l'enceinte de fabrication, et plus généralement du châssis de la machine.

De préférence, le vibrateur 84 est monté le long d'une direction D84 inclinée d'un angle α de 25° par rapport au plan P82 de la plateforme 82, et donc par rapport à la direction longitudinale D42 du conduit de distribution 42, le conduit de distribution 42 étant monté parallèlement au plan P82 de la plateforme. Ainsi, les vibrations créées par le dispositif vibrant 44 s'étendent dans une direction inclinée de 25 ° par rapport à la direction longitudinale D42 du conduit de distribution 42.

Toujours de préférence, les vibrations générées par le vibrateur 84 ont une amplitude crête à crête d'environ 2 millimètres, soit 1 millimètre de part et d'autre d'un point central.

Enfin, les vibrations générées par le vibrateur 84 se situent dans les basses fréquences, de 1 Hz à 150 Hz. Pour une poudre peu dense composée de titane par exemple, les vibrations utilisées ont une fréquence se situant autour de 15 Hz. Pour une poudre plus dense composée d'acier inoxydable par exemple, les vibrations utilisées ont une fréquence se situant autour de 35 Hz. Donc, idéalement, les vibrations générées par le vibrateur 84 se situent entre 10 et 50 Hz.

Avec ou sans support à inclinaison réglable 60, les vibrations générées par le dispositif vibrant 44 peuvent permettre de suffisamment maîtriser le débit et la stabilité du flux de poudre entre le réservoir tampon 38 et le point de distribution P1. Toutefois, pour distribuer des poudres très fluides ou pour maîtriser davantage encore le débit et la stabilité du flux de poudre entre le réservoir tampon 38 et le point de distribution P1, le dispositif de distribution de poudre 32 peut comprendre un régulateur de débit 62 à l'intérieur du conduit de distribution 42.

Ce régulateur de débit 62 prend de préférence la forme d'un obturateur 64 monté mobile en rotation à l'intérieur du conduit de distribution 42. En faisant varier l'inclinaison de l'obturateur 64, on fait varier localement la section intérieure du conduit de distribution 42, ce qui permet d'augmenter ou de réduire le débit maximal du flux de poudre dans le conduit de distribution 42 entre le réservoir tampon 38 et le point de distribution de poudre P1.

Avantageusement, l'inclinaison de l'obturateur 64 peut être contrôlée via un actionneur 66 tel un vérin.

Il est à noter que, même si cela est réalisable, il n'est pas envisagé de faire varier l'inclinaison de l'obturateur 64 au cours d'une distribution de poudre. Au contraire, il est prévu de trouver par des essais la meilleure position de l'obturateur, c'est-à-dire la position permettant la meilleure maîtrise du flux de la poudre à distribuer, et de conserver cette position pendant tout le cycle de fabrication additive et donc lors de chaque cycle de distribution de poudre réalisé sur la surface de réception mobile 28 pendant un cycle de fabrication additive.

Pour s'assurer de gaver en poudre l'extrémité amont E1 du conduit de distribution 42, le réservoir tampon 38 a une section supérieure à la section du conduit de distribution 42. Plus précisément, la section minimale du réservoir tampon est environ deux fois supérieure à la section maximale du conduit de distribution 42.

De préférence, le réservoir tampon 38 est de forme tronconique et relié au conduit de distribution 42 par sa base de plus petit diamètre. De préférence, le conduit de distribution 42 prend la forme d'un tube cylindrique, par exemple métallique. Aussi, la section intérieure de la base de plus petit diamètre du réservoir tampon 38 est environ deux fois supérieure à la section intérieure du tube formant le conduit de distribution.

Pour éviter l'apparition de voûtes de poudre en partie inférieure du réservoir tampon 38 et favoriser l'action des vibrations sur l'écoulement de la poudre, la section de jonction S1 entre le réservoir tampon 38 et le conduit de distribution 42 a une forme oblongue.

Comme le réservoir tampon 38 est de forme tronconique et relié au conduit de distribution 42 par sa base de plus petit diamètre, le réservoir tampon 38 est relié au conduit flexible 46 par sa base de plus grand diamètre. La section intérieure de la base de plus grand diamètre du réservoir tampon 38, ainsi que les sections intérieures du conduit flexible 46, de la vanne à membrane 52 et de l'alimentation en poudre 40 sont environ trois fois supérieures à la section intérieure du tube formant le conduit de distribution.

De préférence, le tube formant le conduit de distribution 42 a une section intérieure circulaire et de diamètre supérieur ou égal à 4 centimètres. En dessous de ce diamètre, des problèmes d'écoulement peuvent se produire avec certaines poudres.

De préférence, l'alimentation en poudre 40, la vanne à membrane 52, le conduit flexible 46 et la plus grande base du réservoir tampon 38 ont des sections intérieures circulaires et de diamètre supérieur ou égal à 10 centimètres de diamètre afin d'éviter l'apparition de voûtes de poudre sans qu'il soit nécessaire de prévoir des moyens, agitateur ou vibrations par exemple, destinés à casser d'éventuelles voûtes à l'intérieur de ces composants du dispositif de distribution de poudre. L'alimentation en poudre 40 et la vanne à membrane 52 ont des sections intérieures de diamètre plus important car ces composants ne sont pas soumis aux vibrations qui permettrait d'éviter l'apparition de voûtes de poudre. De même, le conduit flexible 46 a une section intérieure de diamètre plus important car le matériau de ce conduit absorbe les vibrations.

Afin d'éviter tout risque d'apparition de voûtes de poudre dans le conduit flexible 46, ce conduit flexible 46 a une longueur de quelques dizaines de centimètres, et de préférence de seulement 5 centimètres.

Pour donner un ordre d'idées, le conduit de distribution 42 a une longueur d'environ 800 millimètres, cette longueur étant dictée par la distance nécessaire pour passer sous les rails 41 à l'intérieur de l'enceinte de fabrication 12 et par l'encombrement du dispositif vibrant 44 à l'extérieur de l'enceinte de fabrication 12.

Afin de s'assurer qu'un flux de poudre est bien présent entre le réservoir tampon 38 et le point de distribution de poudre P1, le dispositif de distribution de poudre 32 peut comprendre un détecteur de poudre 68 placé à l'intérieur du conduit de distribution 42. Idéalement, ce détecteur de poudre 68 est disposé à mi-longueur du tube formant le conduit de distribution 42. Dans le cas où il est prévu un régulateur de débit 62 à l'intérieur du conduit de distribution, le détecteur de poudre 68 est prévu en aval du régulateur.

De préférence, les détecteurs de niveau haut de poudre 60, de niveau bas de poudre 58, et de présence de poudre 68 dans le conduit 42 prennent la forme de capteurs capacitifs haute fréquence permettant de détecter des poudres métalliques ou non-métalliques comme par exemple des poudres de céramique.

Dans la machine selon l'invention, la surface de réception mobile 28 se situe de préférence à l'intérieur de l'enceinte de fabrication 12, le point de distribution P1 se situe de préférence à l'intérieur de l'enceinte de fabrication 12, au-dessus de la surface de réception mobile 28 ou au-dessus d'un point par où passe la surface de réception mobile 28 lorsqu'elle se positionne à proximité d'une zone de fabrication.

Comme le point de distribution de poudre P1 se situe de préférence à l'intérieur de l'enceinte de fabrication 12, le conduit de distribution 42 traverse une paroi 70 de l'enceinte de fabrication 12 de la machine et le réservoir tampon 38 se situe à l'extérieur de l'enceinte de fabrication 12. Plus en détail, seule l'extrémité aval E1 du conduit de distribution est présente à l'intérieur de l'enceinte de fabrication 12, le dispositif vibrant 44, le conduit flexible 46, la vanne à membrane 52, l'alimentation en poudre 40 et le réservoir principal 50 étant de préférence disposés à l'extérieur de l'enceinte de fabrication 12.

Afin d'éviter la transmission de vibrations entre le conduit de distribution 42 et la paroi 70 de l'enceinte traversée par ce conduit et aussi afin de maintenir l'étanchéité de l'enceinte de fabrication, un manchon flexible 72, par exemple à soufflets, relie la paroi 70 au conduit de distribution 42. Plus en détail, le manchon flexible 72 relie une ouverture 74 réalisée dans la paroi 70 de l'enceinte à une couronne 76 montée autour du conduit de distribution 42.

Avantageusement, le manchon flexible 72 permet aussi l'inclinaison du conduit de distribution 42 avec le support à inclinaison réglable 60.

Au-dessus du plan de travail 18 et de la surface mobile de réception 28, le point de distribution P1 est formé par l'extrémité aval E2 du conduit de distribution 42. Cette extrémité aval comprend une première réduction de section 78 constante sur une longueur de quelques centimètres pour réduire l'encombrement de l'extrémité aval E2 du conduit de distribution 42, et notamment pour permettre le passage de l'extrémité aval E2 du conduit de distribution 42 sous les rails 41 du chariot 31.

Ensuite, l'extrémité aval E2 du conduit 42 comprend une seconde réduction de section 80 réduisant progressivement la section intérieure du conduit de distribution 42 jusqu'à une ouverture 01 formant le point de distribution de poudre P1. Cette seconde réduction de section 80 permet de casser le jet de poudre afin d'éviter de projeter de la poudre au-delà de la surface de réception mobile 28. De plus, cette seconde réduction de section 80 prend la forme d'une pièce métallique de plusieurs millimètres d'épaisseurs afin de protéger la poudre distribuée des rayons X générés par l'utilisation d'un faisceau d'électrons pour la fabrication additive.

De préférence, l'ouverture 01 formant le point de distribution de poudre P1 est orientée vers le bas, c'est-à-dire en regard du plan de travail 18 et de la surface mobile de réception 28. Cette orientation favorise l'écoulement de la poudre sur la surface de réception mobile 28 et limite les projections de poudre au-delà de la surface de réception mobile 28.

Le point de distribution de poudre P1 est de préférence unique. Toutefois, dans le cas où plusieurs zones de fabrication 20 sont présentes dans l'enceinte de fabrication 12, la machine de fabrication additive peut comprendre plusieurs surfaces de réception mobiles et donc plusieurs points de distribution de poudre appartenant à différents dispositifs de distribution de poudre 32 selon l'invention, de préférence un dispositif de distribution et un point de distribution par zone de fabrication et surface de réception mobile.

Toujours de préférence et parce que la surface de réception 28 est mobile, le point de distribution de poudre P1 est fixe à l'intérieur de l'enceinte de fabrication 12.

L'unicité du point de distribution de poudre P1 est avantageuse car elle permet de réduire l'encombrement du dispositif de distribution 32 et de l'ensemble de la machine 10.

Avantageusement, en faisant varier la vitesse de déplacement de la surface de réception mobile 28 lors d'une distribution de poudre, il est possible de faire varier la hauteur du cordon de poudre déposé à proximité de la zone de fabrication 20. Cela permet d'ajuster au mieux la quantité de poudre déposée sur la surface de réception mobile 28 à une zone de fabrication 20 présentant au moins deux longueurs différentes dans la direction horizontale D40 de translation du chariot 31, comme par exemple dans le cas d'une zone de fabrication 20 circulaire.

Une fois le cordon de poudre déposé sur la surface de réception mobile 28 via le point de distribution P1, le dispositif d'étalement 30 est mis en translation de manière à étaler la poudre sur la zone de fabrication 20 qui peut être circulaire ou polygonale.

De préférence, le réservoir principal 50, l'alimentation en poudre 40, le corps 53 de la vanne à membrane 52, le réservoir tampon 38 et le conduit de distribution 42 sont réalisés dans un acier inoxydable qui est un matériau qui conserve une bonne étanchéité au vide. De plus, le réservoir principal 50, l'alimentation en poudre 40, le corps 53 de la vanne à membrane 52, le réservoir tampon 38 et le conduit de distribution 42 sont réalisés dans un acier inoxydable et amagnétique afin d'éviter de magnétiser les poudres métalliques.

Idéalement, le point de distribution de poudre P1 se situe à environ 1 centimètre de la surface de réception mobile 28. Cette hauteur est suffisante pour permettre la dépose d'un cordon de poudre de plusieurs millimètres de hauteur sur la surface de réception mobile 28 et pour éviter de projeter de la poudre au-delà de la surface de réception mobile 28.

## Revendications

1. Machine (10) de fabrication additive par dépôt de lit de poudre, cette machine de fabrication additive comprenant une enceinte de fabrication (12) et au moins une source de chaleur ou d'énergie (14) utilisée pour fusionner de manière sélective une couche de poudre de fabrication additive déposée à l'intérieur de l'enceinte de fabrication, la machine de fabrication additive comprenant au moins une surface de réception de poudre mobile (28) et apte à se déplacer à proximité d'une zone de fabrication (20) située à l'intérieur de l'enceinte de fabrication, un dispositif d'étalement de poudre (30) permettant d'étaler la poudre de la surface de réception mobile vers la zone de fabrication, et un dispositif de distribution de poudre (32) sur la surface de réception mobile, le dispositif de distribution de poudre comprenant un réservoir tampon (38) relié à une alimentation en poudre (40),
la machine de fabrication additive étant **caractérisée en ce qu'**un conduit de distribution (42) relie le réservoir tampon à un point de distribution de poudre (P1) situé au-dessus de la surface de réception mobile, et **en ce que** le conduit de distribution (42) est monté sur un dispositif vibrant (44) permettant de faire vibrer le conduit de distribution de façon à générer un flux continu de poudre dans le conduit de distribution et du réservoir tampon vers le point de distribution de poudre.

2. Machine (10) de fabrication additive par dépôt de lit de poudre selon la revendication 1, dans laquelle le réservoir tampon est fixé de manière rigide au conduit de distribution.

3. Machine (10) de fabrication additive par dépôt de lit de poudre selon la revendication 1 ou la revendication 2, dans laquelle le réservoir tampon est relié à l'alimentation en poudre par un conduit flexible (46).

4. Machine (10) de fabrication additive par dépôt de lit de poudre selon la revendication 3, dans laquelle l'alimentation en poudre comprend des moyens de réception (48) d'un réservoir principal (50).

5. Machine (10) de fabrication additive par dépôt de lit de poudre selon la revendication 3 ou la revendication 4, dans laquelle une vanne à membrane (52) est intercalée entre l'alimentation en poudre (40) et le conduit flexible (46).

6. Machine (10) de fabrication additive par dépôt de lit de poudre selon l'une des revendications précédentes, dans laquelle le dispositif vibrant (44) et le conduit de distribution (42) sont montés sur un support à inclinaison réglable (60).

7. Machine (10) de fabrication additive par dépôt de lit de poudre selon l'une des revendications précédentes, dans laquelle le dispositif de distribution de poudre (32) comprend un régulateur de débit (62) à l'intérieur du conduit de distribution.

8. Machine (10) de fabrication additive par dépôt de lit de poudre selon la revendication 7, dans laquelle le régulateur de débit prend la forme d'un obturateur (64) monté mobile en rotation à l'intérieur du conduit de distribution (42).

9. Machine (10) de fabrication additive par dépôt de lit de poudre selon l'une des revendications précédentes, dans laquelle le réservoir tampon (38) a une section supérieure à la section du conduit de distribution (42).

10. Machine (10) de fabrication additive par dépôt de lit de poudre selon la revendication 9, dans laquelle la section de jonction (S1) entre le réservoir tampon (38) et le conduit de distribution (42) a une forme oblongue.

11. Machine (10) de fabrication additive par dépôt de lit de poudre selon l'une des revendications précédentes, dans laquelle le dispositif de distribution de poudre (32) comprend un détecteur de poudre (68) placé à l'intérieur du conduit de distribution (42).

12. Machine (10) de fabrication additive par dépôt de lit de poudre selon l'une des revendications précédentes, dans laquelle le conduit de distribution (42) traverse une paroi (70) de l'enceinte de fabrication de la machine, le point de distribution de poudre (P1) se situant à l'intérieur de l'enceinte de fabrication (12) et le réservoir tampon (38) se situant à l'extérieur de l'enceinte de fabrication.

## Patentansprüche

1. Maschine (10) zur generativen Fertigung durch Aufbringen eines Pulverbetts, wobei diese Maschine zur generativen Fertigung einen Fertigungsraum (12) umfasst und mindestens eine Wärme- oder Energiequelle (14), die dazu verwendet wird, eine Schicht Pulver zur generativen Fertigung, die im Inneren des Fertigungsraums aufgebracht wird, selektiv zu schmelzen, wobei die Maschine zur generativen Fertigung mindestens eine Pulveraufnahmefläche (28), die mobil ist und geeignet ist, sich in der Nähe eines Fertigungsbereichs (20) zu bewegen, der im Inneren des Fertigungsraums gelegen ist, eine Vorrichtung zum Ausbreiten von Pulver (30), die es ermöglicht, das Pulver von der mobilen Aufnahmefläche zum Fertigungsbereich hin auszubreiten, und eine Vorrichtung zum Verteilen von Pulver (32) auf der mobilen Aufnahmefläche umfasst, wobei die Vorrichtung zum Verteilen von Pulver einen Pufferbehälter (38) umfasst, der mit einer Pulverzuführung (40) verbunden ist, wobei die Maschine zur generativen Fertigung **dadurch gekennzeichnet ist, dass** eine Verteilungsleitung (42) den Pufferbehälter mit einem Pulververteilungspunkt (P1) verbindet, der oberhalb der mobilen Aufnahmefläche gelegen ist, und dass die Verteilungsleitung (42) an einer vibrierenden Vorrichtung (44) montiert ist, die es ermöglicht, die Verteilungsleitung vibrieren zu lassen, so dass ein kontinuierlicher Pulverstrom in der Verteilungsleitung und vom Pufferbehälter zum Pulverteilungspunkt hin erzeugt wird.

2. Maschine (10) zur generativen Fertigung durch Aufbringen eines Pulverbetts nach Anspruch 1, bei welcher der Pufferbehälter starr an der Verteilungsleitung befestigt ist.

3. Maschine (10) zur generativen Fertigung durch Aufbringen eines Pulverbetts nach Anspruch 1 oder Anspruch 2, bei welcher der Pufferbehälter mit der Pulverzuführung durch eine flexible Leitung (46) verbunden ist.

4. Maschine (10) zur generativen Fertigung durch Aufbringen eines Pulverbetts nach Anspruch 3, bei der die Pulverzuführung Aufnahmemittel (48) zum Aufnehmen eines Hauptbehälters (50) umfasst.

5. Maschine (10) zur generativen Fertigung durch Aufbringen eines Pulverbetts nach Anspruch 3 oder Anspruch 4, bei der ein Membranventil (52) zwischen die Pulverzuführung (40) und die flexible Leitung (46) gesetzt ist.

6. Maschine (10) zur generativen Fertigung durch Aufbringen eines Pulverbetts nach einem der vorhergehenden Ansprüche, bei der die vibrierende Vorrichtung (44) und die Verteilungsleitung (42) an einer Halterung mit verstellbarer Neigung (60) montiert sind.

7. Maschine (10) zur generativen Fertigung durch Aufbringen eines Pulverbetts nach einem der vorhergehenden Ansprüche, bei der die Vorrichtung zum Verteilen von Pulver (32) einen Durchflussmengenregler (62) im Inneren der Verteilungsleitung umfasst.

8. Maschine (10) zur generativen Fertigung durch Aufbringen eines Pulverbetts nach Anspruch 7, bei welcher der Durchflussmengenregler die Form eines Verschlusses (64) annimmt, der drehbeweglich im Inneren der Verteilungsleitung (42) montiert ist.

9. Maschine (10) zur generativen Fertigung durch Aufbringen eines Pulverbetts nach einem der vorhergehenden Ansprüche, bei welcher der Pufferbehälter (38) einen Querschnitt hat, der größer als der Querschnitt der Verteilungsleitung (42) ist.

10. Maschine (10) zur generativen Fertigung durch Aufbringen eines Pulverbetts nach Anspruch 9, bei welcher der Verbindungsquerschnitt (S1) zwischen dem Pufferbehälter (38) und der Verteilungsleitung (42) eine längliche Form hat.

11. Maschine (10) zur generativen Fertigung durch Aufbringen eines Pulverbetts nach einem der vorhergehenden Ansprüche, bei der die Vorrichtung zum Verteilen von Pulver (32) einen Pulverdetektor (68) umfasst, der im Inneren der Verteilungsleitung (42) angeordnet ist.

12. Maschine (10) zur generativen Fertigung durch Aufbringen eines Pulverbetts nach einem der vorhergehenden Ansprüche, bei der die Verteilungsleitung (42) eine Wand (70) des Fertigungsraums der Maschine durchdringt, wobei der Pulververteilungspunkt (P1) im Inneren des Fertigungsraums (12) gelegen ist und der Pufferbehälter (38) außerhalb des Fertigungsraums gelegen ist.

## Claims

1. Additive manufacturing machine (10) based on powder bed deposition, this additive manufacturing machine comprising a manufacturing enclosure (12) and at least one heat or energy source (14) used to selectively melt a layer of additive manufacturing powder deposited inside the manufacturing enclosure, the additive manufacturing machine comprising at least one movable powder reception surface (28) capable of being displaced in proximity to a manufacturing zone (20) situated inside the manufacturing enclosure, a powder spreading device (30) making it possible to spread the powder from the movable reception surface to the manufacturing zone, and a device (32) for distributing powder on the movable reception surface, the powder distribution device comprising a buffer tank (38) linked to a powder supply (40), the additive manufacturing machine being **characterized in that** a distribution duct (42) links the buffer tank to a powder distribution point (P1) situated above the movable reception surface, and **in that** the distribution duct (42) is mounted on a vibrating device (44) making it possible to vibrate the distribution duct so as to generate a continuous flow of powder in the distribution duct and from the buffer tank to the powder distribution point.

2. Additive manufacturing machine (10) based on powder bed deposition according to Claim 1, wherein the buffer tank is rigidly fixed to the distribution duct.

3. Additive manufacturing machine (10) based on powder bed deposition according to Claim 1 or Claim 2, wherein the buffer tank is linked to the powder supply by a flexible duct (46).

4. Additive manufacturing machine (10) based on powder bed deposition according to Claim 3, wherein the powder supply comprises reception means (48) from a main tank (50).

5. Additive manufacturing machine (10) based on powder bed deposition according to Claim 3 or Claim 4, wherein a diaphragm control valve (52) is inserted between the powder supply (40) and the flexible duct (46).

6. Additive manufacturing machine (10) based on powder bed deposition according to one of the preceding claims, wherein the vibrating device (44) and the distribution duct (42) are mounted on a support with adjustable inclination (60).

7. Additive manufacturing machine (10) based on powder bed deposition according to one of the preceding claims, wherein the powder distribution device (32) comprises a flow rate regulator (62) inside the distribution duct.

8. Additive manufacturing machine (10) based on powder bed deposition according to Claim 7, wherein the flow rate regulator takes the form of a shutter (64) movably mounted to rotate inside the distribution duct (42).

9. Additive manufacturing machine (10) based on powder bed deposition according to one of the preceding claims, wherein the buffer tank (38) has a section greater than the section of the distribution duct (42).

10. Additive manufacturing machine (10) based on powder bed deposition according to Claim 9, wherein the junction section (S1) between the buffer tank (38) and the distribution duct (42) has an oblong form.

11. Additive manufacturing machine (10) based on powder bed deposition according to one of the preceding claims, wherein the powder distribution device (32) comprises a powder detector (68) placed inside the distribution duct (42).

12. Additive manufacturing machine (10) based on powder bed deposition according to one of the preceding claims, wherein the distribution duct (42) passes through a wall (70) of the manufacturing enclosure of the machine, the powder distribution point (P1) being situated inside the manufacturing enclosure (12) and the buffer tank (38) being situated outside the manufacturing enclosure.
